Europäisches Patentamt

European Patent Office

Office européen des brevets

(11) Publication number: **0 015 298**
**B1**

## (12) EUROPEAN PATENT SPECIFICATION

(45) Date of publication of patent specification: **25.01.84**

(21) Application number: **78850012.2**

(22) Date of filing: **26.09.78**

(51) Int. Cl.³: **B 63 B 21/00, F 16 F 1/46,**
**B 60 D 1/18, F 16 G 13/24**

(54) Tension spring device.

(30) Priority: **26.09.77 SE 7710727**

(43) Date of publication of application:
**17.09.80 Bulletin 80/19**

(45) Publication of the grant of the patent:
**25.01.84 Bulletin 84/4**

(84) Designated Contracting States:
**BE DE FR GB NL**

(56) References cited:
**CH - A - 428 330**
**FR - A - 864 351**
**FR - A - 2 155 479**
**GB - A - 847 683**
**US - A - 2 450 154**
**US - A - 2 452 752**
**US - A - 3 353 817**
**US - A - 3 704 877**
**US - A - 4 022 450**

(73) Proprietor: **Horda Gummifabrik Aktiebolag**
**Box 2087**
**S-331 02 VÄRNAMO (SE)**

(72) Inventor: **Johansson, Rune**
**Ängsvägen 3 Horda**
**S-330 17 Rydaholm (SE)**

(74) Representative: **Onn, Thorsten et al,**
**AB STOCKHOLMS PATENTBYRA Box 3129**
**S-103 62 Stockholm (SE)**

Courier Press, Leamington Spa, England.

Tension spring device

This invention relates to a tension spring device, and especially a device for taking up tensile stresses under resilient conditions when connecting bodies, as when towing, mooring, anchorage, damping, etc. and comprising a spring element of an elastic material, preferably rubber, at least one draw element and connecting devices, which are united to portions of the draw element spaced from each other and connected to points of the spring element spaced from each other.

When for example a connection between bodies is desirable one uses holding or drawing ropes, chains or the like and it is often necessary and in most cases desirable to provide such holding or drawing ropes or the like with a spring element for taking up the tensile stresses which occur. Thus, one wants to avoid strong pulse in the rope or the like. Often, one tries to attain that the rope or the like can be maintained in a substantially constant tension, when the rope is subjected to tension load. This is of great importance for example when the rope, chain or the like is to be used for the mooring of boats or towing of all kinds of things.

There are arrangements known for taking up stresses under resilient conditions and for example helical springs shaped of a metal wire, which have been used for the mooring of boats, whereby the spring has been arranged at the mooring-place for mooring of the boats by means of a mooring rope. Such conventional helical springs made of metal have also been included in holding ropes, drawing ropes or chains as a resilient element, whereby the ropes or chains have been split up in two pieces, which afterwards have been connected to each of the ends of the spring.

However, there are inconveniences when using such known helical springs of metal by the fact that when the rope or chain is connected to the spring one obtains a holding rope or a drawing rope or a chain with less strength than the strength of the rope or the chain. Further, it has been found that springs made of metal can cause damages on boats, when such a spring is included in the mooring.

For many reasons it is preferable to use a spring element consisting of ruber, inter alia because of the fact that the spring motion is soundless and that no scraping of for example a boat takes place. Hereby, one has made use of a bar-shaped body of rubber as a spring element and to avoid the relatively great problems in consideration of the relatively low tensile strength and tearing strength of the rubber when the spring has only been made of rubber, one has arranged the holding rope or the drawing rope or the like around the bar-shaped spring in a helical curve. Such a spring presents a spring strength which often is too small. When for example using said spring for mooring of a buoy it has occurred that it exists a need of a suitable tension spring device, whereby one has suggested that the portion of the length of the drawing rope is vulcanized into a bar-shaped body of rubber, whereby the rope in its vulcanized condition extends in a helical screw path. Thus, a portion of the rope has been provided with a spring element, whereby when tensile stresses occur in the rope, there will be a resilient effect by means of the resilient resistance of the rubber against a stretching of the rope.

From FR—A—2 155 479 a mooring arrangement for taking up tensile stresses under resilient conditions is known wherein the draw element extends within the spring element in fixed attachment with the elastic material of the spring element. On the other hand, the shape of the spring element is such that a straight line between the connecting devices does not extend outside the spring element.

In US—A—4 022 450 a mooring arrangement is disclosed wherein the spring element shows such a shape that a straight line between two connecting devices extends outside the spring element. However, in this device the draw element does not extend within the spring element.

The two technical solutions of the common problem given in FR—A—2 155 479 and US—A—4 022 450 independently lead away from the solution proposed according to the invention.

A similar device to the device of US—A—4 022 450 for towing purposes is known from GB—A 847 683, which discloses in combination with a flexible element e.g. a rope, a jerk-absorbing device comprising an elongated member of resilient material having holes therein through which the flexible element extends or is adapted to extend alternately from opposite sides of the resilient member, whereby said flexible element assumes or is adapted to assume an undulated configuration and, under the action of a jerk, causes or is adapted to cause the resilient member to be deformed, dampening the effects of said jerk. However, said device differs from that according to the invention and fails to disclose the combination of the features of the invention.

The device in accordance with the invention fulfils the demands made on a tension spring device of the kind referred to above and at the same time the disadvantages of prior art are set aside. One object of the invention is to produce an improved tension spring device of such a kind, where rubber is utilized as a spring element. There is one improvement in addition to use the resilient properties of the rubber of the spring element, namely that the spring element itself is shaped as a springy or resilient element and in consideration of said shaping the spring element could only be made of a rubber body showing the specific shaping. Such a rubber body is furnished with connecting devices for connecting of holding ropes or drawing ropes or chains or the like but to secure a continued connection between these bodies or elements which are connected by the holding rope or drawing rope or the chain or the like the spring element is provided with at least one draw element of such a kind and strength that when the spring element is broken the draw element continues connecting these bodies or elements which are to be connected. The device according to the invention is characterized in that the draw element between said connecting points extends within the spring element in fixed attachment with the elastic material, and in that the spring element has such a shape in a condition unaffected by tensile stresses that a straight line between at least two connecting devices at least partly extends outside the spring element, the shape of the spring element, in view of its unaffected condition, will elastically deform in applying forces separating the connecting devices.

According to a preferred embodiment the connecting devices are united to the draw element by connecting elements, which are provided within the spring element in fixed attachment with the elastic material.

According to another preferred embodiment the connecting devices are at least partly surrounded by and firmly connected with the elastic spring element.

According to still another preferred embodiment the draw element or the draw elements together with the connecting devices or the connecting elements of the connecting devices extend within the spring element between end portions of the spring element or corresponding portions of the spring element.

A further feature according to the invention is that said draw element extends inside said spring element and has a length exceeding the length of the spring element. By this draw element, preferably both said end portions, could be used as connecting devices for holding ropes or drawing ropes or chains or the like. The device can be fixed to a body or an element as a bridge, buoy, a grounding stone for the buoy, machine elements, mechanical components etc.

The device according to the invention will take up tensile stresses as a combination of tensile stress, bending stress and some compressive stress on the elastic spring element. It is further possible in an easy manner to change the character of the tension spring device by changing the shape and/or changing the dimensions of the spring element.

Further characteristics and advantages according to the invention will be evident from examples in the following description of the invention, reference being made to the accompanying schematic drawings, wherein fig. 1 shows in perspective one embodiment of the device according to the invention, fig. 2 shows in plane and partly in cross section a second embodiment of the device according to the invention, fig. 3 shows in perspective a third embodiment of the device according to the invention and fig. 3a—3e show in plane further embodiments of the invention.

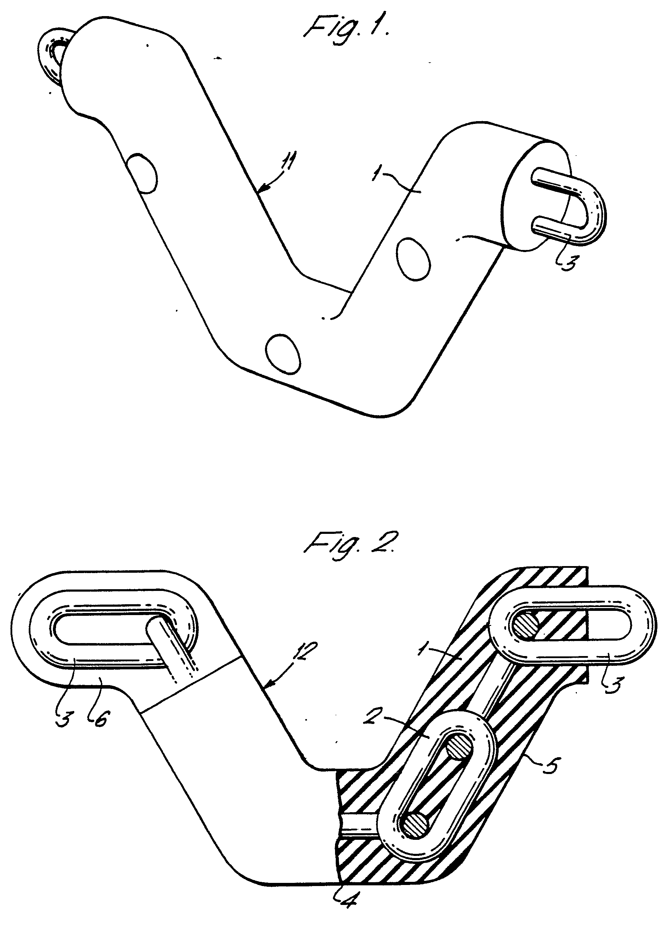

The spring element 1 consists of a body of an elastic material, preferably rubber, the end portions or corresponding portions of which showing connecting devices 3, which are fixedly connected to the body and show such a shape, that connections with the device are possible. The connecting devices 3 are arranged at a distance from each other, and the spring element 1 is arranged between the connecting devices 3. The spring element 1 has such a shape that it diverges from a straight line between at least two connecting devices 3, i.e. when the spring element 1 shows for example two connecting devices 3 it cannot be shaped to run in a straight line between the connecting devices 3. In fig. 1 there is shown a device 11 according to the invention, which substantially is shaped as a V. The end portions of the spring element 1 are provided with connecting devices 3, which are formed by a draw element arranged inside the spring element 1, i.e. the device has such a dimension and shape that the end portions of the draw element would project from the spring element 1 and the projecting portions of the draw element are the connecting devices 3. The connecting devices 3 as well as the draw element can be a portion of a holding rope, a drawing rope, a chain or the like. According to the embodiment shown, the draw elements has a length exceeding the length of the spring element 1. The draw element extends inside the spring element 1 in its extension between the end portions of the spring element 1.

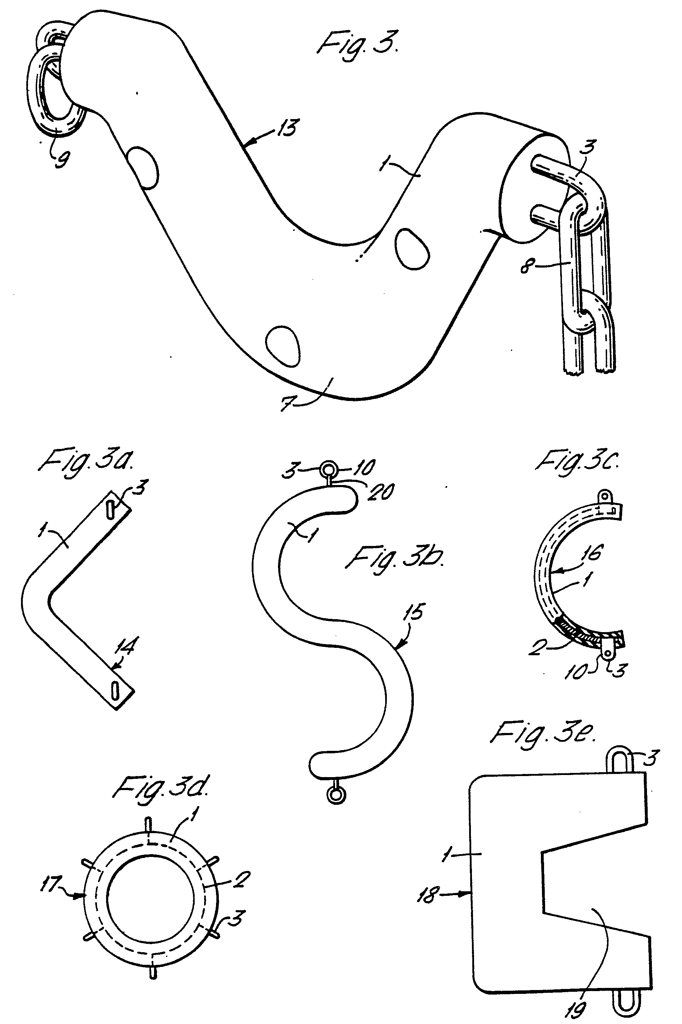

In fig. 2 there is shown a device 12 according to the invention, and the above mentioned extension of the draw element inside the spring element 1 is shown therein. The draw element 2 is preferably made of a non-stretching material, for example metal, or a material showing an elasticity, which is essentially less than the elasticity of the material of the spring element 1. An example of such a material is a plastic material. The draw element 2 must be strong or firm against tensile stresses, and is made for example of a metal chain, a cable, a wire, a rope or a chain as shown in the example. The chain is shaped and arranged in such a way that a link of the chain extends in the wrist portion 4 of the device, while two links of the chain extend in each leg 5 of the device. Because the draw element 2 will have a connection, preferably a fixed connection, to the connecting devices 3, these consist of a portion of a connecting element of the draw element 2, the connecting device 3 and the connecting element forming a link of the chain, see right part of fig. 2.

In the device 13 shown in fig. 3 the spring element 1 has substantially the form of a U or a combination of a U and a V. The wrist 7 of the spring element 1 has a greater dimension of the elastic material of the spring element. The reason therefor is that there exist great stresses in that portion. There is provided a holding rope or a drawing rope 8, which is united with the connecting device 3. It is also possible to arrange a ring 9 to the connecting device 3, said ring being joined with the connecting device 3 to form a suitable connection to a second device or a second element.

Several examples of a device 14, 15, 16, 17 and 18 respectively according to the invention are shown in fig. 3a—3e. The device 14 according to fig. 3a has a spring element 1, which mainly is shaped as a V. The spring element 1 or the elastic material, which is included in the spring element 1, is arranged to surround the connecting devices 3 and also the draw element. The connecting devices 3 are thus included into the configuration of the V-shaped rubber body.

Fig. 3b—3c show a spring element 1, which is formed by a body which mainly is shaped as a S and a semicircle respectively. From the figures is seen that the construction and shape of the connecting devices 3 differ from those of the draw element 2 according to fig. 1—3. Thus, the connecting device 3 of fig. 3b comprises a ring or the like 10, which is united with the spring element 1 by means of a connection element 20. In this case the connecting device 3 is united with the spring element 1 through the connection element 20, which is arranged into the spring element 1 by a fixed connection with the elastic material, and besides the connection element 20 can be united with the draw element 2 arranged into the spring element 1.

Thus, the embodiments of fig. 3a—3c show that the draw element 2 or this together with the connecting devices 3 or the connecting elements of the connecting devices 3 extend through the spring element 1 in its extension between end portions of the spring element 1 or corresponding portions thereof.

The connecting device 3 according to the embodiment in fig. 3c comprises a connecting portion 10 projecting from the spring element 1, which is united or arranged with the draw element 2, which in this example consists of a wire.

The embodiment according to fig. 3d shows that the spring element 1 can be composed of a body, which forms a circular, oval or another endless body, for example a body having three or more edges. The device 17 has a circular form with a draw element 2 and connecting devices 3. The draw element 2 is an endless draw element which can have two or more, for example four or six, connecting devices 3 projecting from the spring element 1.

In fig. 3e there is shown a device 18 according to the invention, the spring element 1 having a form, which is more or less like a square or a rectangular plate with one or more notches 19 formed in the elastic material and arranged between two connecting devices 3 of the spring element 1.

It is evident from the examples above that the spring element 1 is shaped as a body showing symmetry in rotation, the axis of rotation extending through two corresponding connecting devices 3. According to one specific embodiment the spring element 1 is shaped with an extension, which mainly is located on one side of the axis of rotation.

There is a great freedom within the concept of the invention to give the device and especially the spring element a suitable form, shape and dimension, which in turn means that the device is applicable to a multiplicity of different uses and fields of application.

Without exceeding the scope of the invention, modifications may be made in the devices shown and described in the examples. Thus, the spring element 1 can show one or more cavities, which results in special properties when tensile stresses are taken up by the device. Further, said cavities can be arranged for taking up an elastic material, which preferably shows a power of elasticity, which differs from that of the remaining material of the spring element.

Other modifications are obvious to one skilled in the art and thus the invention is not limited to the embodiments shown and described, but only by the following claims.

## Claims

1. A device for taking up tensile stresses under resilient conditions when connecting bodies, as when towing, mooring, anchorage, damping, etc. and comprising a spring element (1) of an elastic material, preferably rubber, at least one draw element (2) and connecting devices (3), which are united to portions of the draw element spaced from each other and connected to points of the spring element spaced from each other, characterized in that the draw element (2) between said connecting points extends within the spring element (1) in fixed attachment with the elastic material, and in that the spring element (1) has such a shape in a condition unaffected by tensile stresses that a straight line between at least two connecting devices (3) at least partly extends outside the spring element (1), the shape of the spring element, in view of its unaffected condition, will elastically deform in applying forces separating the connecting devices.

2. A device according to claim 1, characterized in that the connecting devices (3) are united to the draw element (2) by connecting elements (20), which are provided within the spring element in fixed attachment with the elastic material.

3. A device according to claim 1 or 2, characterized in that the connecting devices (3) are at least partly surrounded by and firmly connected with the elastic spring element (1).

4. A device according to any one of the preceding claims, characterized in that the draw element (2) or the draw elements (2) together with the connecting devices (3) or the connecting elements (20) of the connecting devices (3) extend within the spring element between end portions of the spring element or corresponding portions of the spring element.

5. A device according to claim 4, characterized in that the draw element (2) extends inside the spring element (1) and has a length exceeding the length of the spring element.

6. A device according to any one of the preceding claims, characterized in that the draw element (2) is formed from a non-elastic material showing an elasticity, which is essentially less than the elasticity of the elastic material of the spring element (1) and consists of a chain, a metal chain or a cable or another body resistant to tensile stresses.

7. A device according to claim 1, characterized in that the spring element (1) is composed of a body which in the main has a shape of a S, U, or a V or a semicircle body or a body showing another angled or curved extension.

8. A device according to claim 7, characterized in that the spring element is composed of a body, which has the shape of a U or a V, the free ends of the legs being arranged at an angle to the legs (5) of said body.

9. A device according to claim 1 or 8, said draw element (2) consisting of a chain, a metal chain, a cable or an equivalent element, which is arranged in the spring element (1), characterized in that each side of an angle, leg (5), wrist (4, 7) or a corresponding portion of said spring element comprises one or more links of the chain or the like.

10. A device according to claim 1, characterized in that the spring element (1) shows one or more cavities.

11. A device according to claim 10, characterized in that the cavities are taking up an elastic material, which preferably shows a power of elasticity, which differs from that of the remaining material to the spring element (1).

12. A device according to claim 1, 7 or 8, characterized in that the spring element (1) is shaped as a body showing symmetry in rotation, whereby the axis of rotation extends through two corresponding connecting devices (3).

13. A device according to claim 12, characterized in that the spring element (1) is shaped with an extension which in the main is located on one side of the axis of rotation.

## Patentansprüche

1. Einrichtung zur Aufnahme von Zugbeanspruchungen unter federnden Verhältnissen bei Verbindung von Körpern, z.B. bei Schleppen, Vertäuung, Verankerung, Dämpfung etc., welche ein Federelement (1) aus einem elastischen Material, vorzugsweise Gummi, mindestens ein Zugelement (2) und Anschlussmittel (3) umfasst, die mit Teilen des Zugelements und mit Punkten des Federelements, die entfernt voneinander sind, verbunden sind, dadurch gekennzeichnet, dass das Zugelement (2) zwischen den Anschlusspunkten sich im Federelemente (1) in fester Verbindung mit dem elastischen Material erstreckt und dass das Federelement (1) in einem von Zugbeanspruchungen unbeeinflussten Zustand eine solche Form hat, dass eine gerade Linie zwischen mindestens zwei Anschlussmitteln (3) sich mindestens teilweise ausserhalb dem Federelemente (1) erstreckt, wobei das Federelement mit Bezug auf seinen unbeeinflussten Zustand elastisch deformiert werden wird, wenn die Anschlussmittel trennende Kräfte appliziert werden.

2. Einrichtung nach Anspruch 1, dadurch gekennzeichnet, dass die Anschlussmittel (3) mit dem Zugelement (2) mittels Anschlusselementen (20) verbunden sind, die im Federelement in fester Verbindung mit dem elastischen Material angeordnet sind.

3. Einrichtung nach Anspruch 1 oder 2, dadurch gekennzeichnet, dass die Anschlussmittel (3) mindestens teilweise von dem elastischen Federelement (1) umgeben und damit fest verbunden sind.

4. Einrichtung nach einem der vorhergehenden Ansprüche, dadurch gekennzeichnet, dass das Zugelement (2) oder die Zugelemente (2) sich im Federelemente zwischen dessen Endteilen oder entsprechenden Teilen zusammen mit den Anschlussmitteln (3) oder den Anschlusselementen (20) der Anschlussmittel (3) erstrecken.

5. Einrichtung nach Anspruch 4, dadurch gekennzeichnet, dass das Zugelement (2) sich im Federelement (1) erstreckt und eine Länge hat, die grösser als die Länge des Federelements ist.

6. Einrichtung nach einem der vorhergehenden Ansprüche, dadurch gekennzeichnet, dass das Zugelement (2) aus einem unelastischen Material ausgebildet ist, das eine Elastizität hat, die wesentlich weniger als die Elastizität des elastischen Materials des Federelements (1) ist und aus einer Zahnkette, Kette oder einem Kabel oder einem anderen Körper besteht, der widerstandsfähig gegen Zugbeanspruchungen ist.

7. Einrichtung nach Anspruch 1, dadurch gekennzeichnet, dass das Federelement (1) aus einem wesentlich S-, U- oder V- oder halbkreisförmigen Körper besteht oder die Form eines Körpers hat, der eine andere winklige oder gebogene Erstreckung hat.

8. Einrichtung nach Anspruch 7, dadurch gekennzeichnet, dass das Federelement aus einem Körper besteht, der die Form eines U oder V hat, wobei die freien Enden der Arme in Winkel zu den Armen (5) des Körpers angeordnet sind.

9. Einrichtung nach Anspruch 1 oder 8, wobei das Zugelement (2) aus einer Zahnkette, Kette, einem Kabel oder einem gleichwertigen Element besteht, das im Federelemente (1) angeordnet ist, dadurch gekennzeichnet, dass jede Seite eines Winkels, Armes (5), Stegs (4, 7) oder entsprechenden Teils des Federelements ein oder mehrere Gelenke der Kette oder ähnliches umfasst.

10. Einrichtung nach Anspruch 1, dadurch gekennzeichnet, dass das Federelement einen oder mehrere Hohlräume hat.

11. Einrichtung nach Anspruch 10, dadurch gekennzeichnet, dass die Hohlräume ein elastisches Material aufnehmen, das vorzugsweise eine Elastizitätsfähigkeit hat, die von der des übrigen elastischen Materials des Federelementes abweicht.

12. Einrichtung nach Anspruch 1, 7 oder 8, dadurch gekennzeichnet, dass das Federelement (1) als ein Körper ausgebildet ist, der Rotationssymmetrie aufweist, wobei die Rotationsachse sich durch zwei entsprechende Anschlussmittel (3) erstreckt.

13. Einrichtung nach Anspruch 12, dadurch gekennzeichnet, dass das Federelement (1) mit einer Verlängerung ausgebildet ist, die hauptsächlich auf einer Seite der Rotationsachse angeordnet ist.

## Revendications

1. Dispositif pour absorber les contraintes de tension dans des conditions d'élasticité lors d'une liaison avec des corps, par exemple lors d'un remorquage, d'un amarrage, d'un ancrage, d'un amortissement, etc., et comprenant un élément élastique (1) formé d'un matériau élastique, de préférence de caoutchouc, au moins un élément de tirage (2) et des dispositifs de liaison (3), qui sont réunis à des parties de l'élément de tirage espacées l'une de l'autre et qui sont reliées à des points de l'élément élastique espacés l'un de l'autre, caractérisé en ce que l'élément de tirage (2) s'étend entre lesdits points de liaison à l'intérieur de l'élément élastique (1) en étant fixé à la matière élastique et en ce que l'élément élastique (1) a une forme telle, dans un condition non affectée par des contraintes de tension, qu'une ligne droite entre au moins deux dispositifs de liaison (3) s'étend au moins partiellement à l'extérieur de l'élément élastique (1), considéré à partir de sa condition non affectée, se déformant élastiquement en appliquant des forces séparant les dispositifs de liaison.

2. Dispositif selon la revendication 1, caractérisé en ce que les dispositifs de liaison (3) sont réunis à l'élément de tirage (2) par des éléments de liaison (20), qui sont placés à l'intérieur de l'élément élastique en étant fixés à la matière élastique.

3. Dispositif selon l'une des revendications 1 ou 2, caractérisé en ce que les dispositifs de liaison (3) sont au moins partiellement entourés par et étroitement reliés à l'élément élastique (1).

4. Dispositif selon l'une quelconque des revendications précédentes, caractérisé en ce que l'élément de tirage (2) ou les éléments de tirage (2), en association avec les dispositifs de liaison (3) ou bien les éléments de liaison (20) des dispositifs de liaison (3), s'étendent à l'intérieur de l'élément élastique entre des parties extrêmes de l'élément élastique our des parties correspondantes de l'élément élastique.

5. Dispositif selon la revendication 4, caractérisé en ce que l'élément de tirage (2) s'étend à l'intérieur de l'élément élastique (1) et a une longueur dépassant la longueur de l'élément élastique.

6. Dispositif selon l'une quelconque des revendications précédentes, caractérisé en ce que l'élément de tirage (2) est formé d'un matériau non élastique possédant une élasticité qui est bien inférieure à l'élasticité de la matière élastique de l'élément élastique (1) et consiste en une chaîne, une chaîne métallique ou un câble ou bien un autre corps résistant à des contraintes de tension.

7. Dispositif selon la revendication 1, caractérisé en ce que l'élément élastique (1) est composé d'un corps qui a essentiellement une forme de S, de U, de V ou de demi-cercle ou bien d'un corps ayant un autre profil anguleux ou incurvé.

8. Dispositif selon la revendication 7, caractérisé en ce que l'élément élastique est composé d'un corps qui a la forme d'un U ou d'un V, les extrémités des branches étant disposées suivant un certain angle par rapport aux branches (5) dudit corps.

9. Dispositif selon l'une des revendications 1 ou 8, ledit élément de tirage (2) se composant d'une chaîne, d'une chaîne métallique, d'un câble ou d'un élément équivalent qui est disposé dans l'élément élastique (1), caractérisé en ce que chaque côté d'un angle, d'une branche (5), d'une crosse (4, 7) ou d'une partie correspondante dudit élément élastique comprend un ou plusieurs maillons de la chaîne ou analogue.

10. Dispositif selon la revendication 1, caractérisé en ce que l'élément élastique (1) comporte une ou plusieurs cavités.

11. Dispositif selon la revendication 10, caractérisé en ce que les cavités reçoivent un matériau élastique, qui possède de préférence un pouvoir d'élasticité qui diffère de celui de la matière restante de l'élément élastique (1).

12. Dispositif selon l'une des revendications 1, 7 ou 8, caractérisé en ce que l'élément élastique (1) est profilé sous forme d'un corps possédant une symétrie en rotation, l'axe de rotation s'étendant au travers de deux dispositifs de liaison (3) correspondants.

13. Dispositif selon la revendication 12, caractérisé en ce que l'élément élastique (1) est profilé avec une partie qui est principalement placée d'un côté de l'axe rotation.

0 015 298

Fig. 1.

Fig. 2.

0 015 298

Fig. 3.

*13*

*9*

*1*

*3*

*8*

*7*

Fig. 3a.

*3*

*1*

*14*

Fig. 3b.

*3* — *10*

*20*

*1*

*15*

Fig. 3c.

*16*

*1*

*2*

*10* *3*

Fig. 3d.

*1*

*17*

*2*

*3*

Fig. 3e.

*3*

*1*

*18*

*19*